# EUROPEAN PATENT SPECIFICATION

(11) **EP 0 663 769 B1**
(45) Date of publication and mention of the grant of the patent: **27.10.1999**
(21) Application number: 93403060.2
(22) Date of filing: 16.12.1993
(51) Int. Cl.: H04N 5/445

(54) **Channel selection in a television receiver**
Kanalumschaltung in einem Fernsehgerät
Commutation de la chaine dans un récepteur de télévision

(43) Date of publication of application: 19.07.1995
(73) Proprietor: THOMSON multimedia, 92648 Boulogne Cédex (FR)
(72) Inventor: Wendling, Bertrand, F-67850 Offendorf (FR)
(74) Representative: Wördemann, Hermes, Dipl.-Ing.

(56) References cited:
- EP-A- 0 267 020
- EP-A- 0 306 704
- FR-A- 2 595 893
- GB-A- 2 257 594
- US-A- 4 249 211
- US-A- 5 021 883
- PATENT ABSTRACTS OF JAPAN vol. 15, no. 453 (E-1134)18 November 1991 & JP-A-03 191 682 (TOSHIBA CORP) 21 August 1991
- PATENT ABSTRACTS OF JAPAN vol. 12, no. 414 (E-677)2 November 1988 & JP-A-63 153 908 (MATSUSHITA ELECTRIC IND CO) 27 June 1988
- PATENT ABSTRACTS OF JAPAN vol. 13, no. 534 (E-852)29 November 1989 & JP-A-01 218 274 (SONY CORPORATION) 31 August 1989

## Description

The invention refers to a television receiver including a channel selector according to the introductory part of claim 1. On current television sets when the observer switches from one channel to another he can see all the channel switching artefacts on the screen with all the locking and synchronizing process. The result of this is not very nice to see.

From EP-A-0 306 704 it is known to use a memory for fading from one channel to a second channel.

It is an object of the invention to suppress such artefacts due to locking and synchronizing process and to improve the subjective picture impression during channel switching.

According to the invention means is provided effecting that with switching from a first channel to a second channel there occurs a growing up picture of the second channel within the picture of the first channel on the picture screen.

The introduction of the new channel picture may be realized by a growing square centered on the screen. Otherwise the introduction of the new channel picture may be made by a panning corner starting for example from the left bottom corner. Introduction of the new channel picture may also be made by a vertical panning of the picture from the bottom to the top or by a horizontal panning of the picture from the left to the right of the screen or by any other special effect.

According to one embodiment of the invention immediately after channel switching the picture signal of the first channel is fed to the picture tube and before the end of the duration of some pictures the smooth fading from the picture of the first channel to the picture of the second channel is performed. The signal for the picture of the first channel after switching from the first channel to the second channel may be derived from a picture memory fed with the incoming signal or from a second tuner provided within the television receiver.

Preferably a picture memory is provided within the signal path to the picture tube. The signal for the picture of the first channel which is displayed after switching from the first to the second channel with a decreasing picture area can be derived from the output of said memory, whereas the signal for the picture of the second channel which is displayed with increasing area on the screen is derived from the tuner, now tuned to the second channel.

The total period from the moment of switching from the first channel to the second channel up to the full display of the picture of the second channel may last about 10 pictures or also a longer time of 1 to 2 seconds. The signal of the second channel may be modified by time compression in such a way that in the increasing partial area occupied by the signal of the second channel the complete picture of the second channel is displayed with reduced dimensions.

In order to make the invention comprehensible some examples of the invention are now described in combination with the attached drawing. Within the drawing:
Figure 1 is a simplified block diagram of a television receiver according to the invention,
Figure 2 is another block diagram of an example of the invention and
Figure 3 to 6 are different forms for smooth fading from the picture of the first channel to the picture of the second channel. Within said figures the white areas represent the picture of the first channel with decreasing area whereas the black areas represent the picture of the second channel with increasing area.

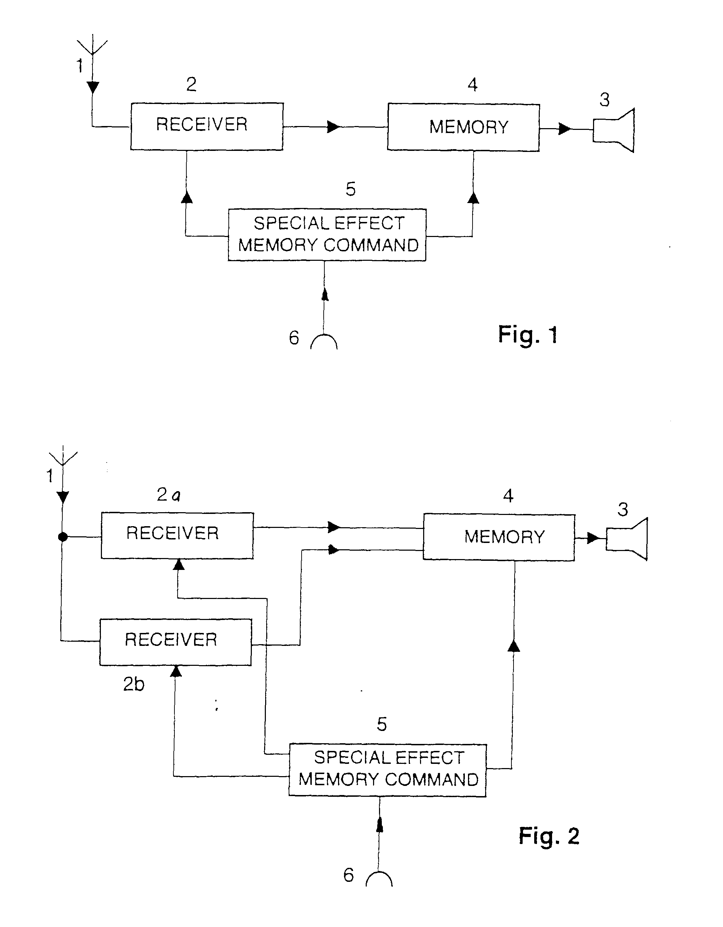

Fig. 1 shows the antenna 1 adapted to receive a plurality of television channels and connected to the receiver 2 including the tuner and all other circuits for converting the received signal to a picture signal for controlling the picture tube 3. Within the signal path from receiver 2 to picture tube 3 a memory 4 for several television pictures is provided. A special effect memory command circuit 5 is connected both to the receiver 2 and the memory 4. A channel command signal is applied to circuit 5 wire terminal 6. The output of memory 4 is controlled by the deflection circuit.

When switching receiver 2 from a first channel to a second channel by tuning, the picture displayed on the tube 3 does not suddenly change from the first channel to the second channel as in prior art television receivers. Instead of this, there is effected - by using memory 4 - a smooth fading or transition from the picture of the first channel to the picture of the second channel to which the receiver is switched by channel selection.

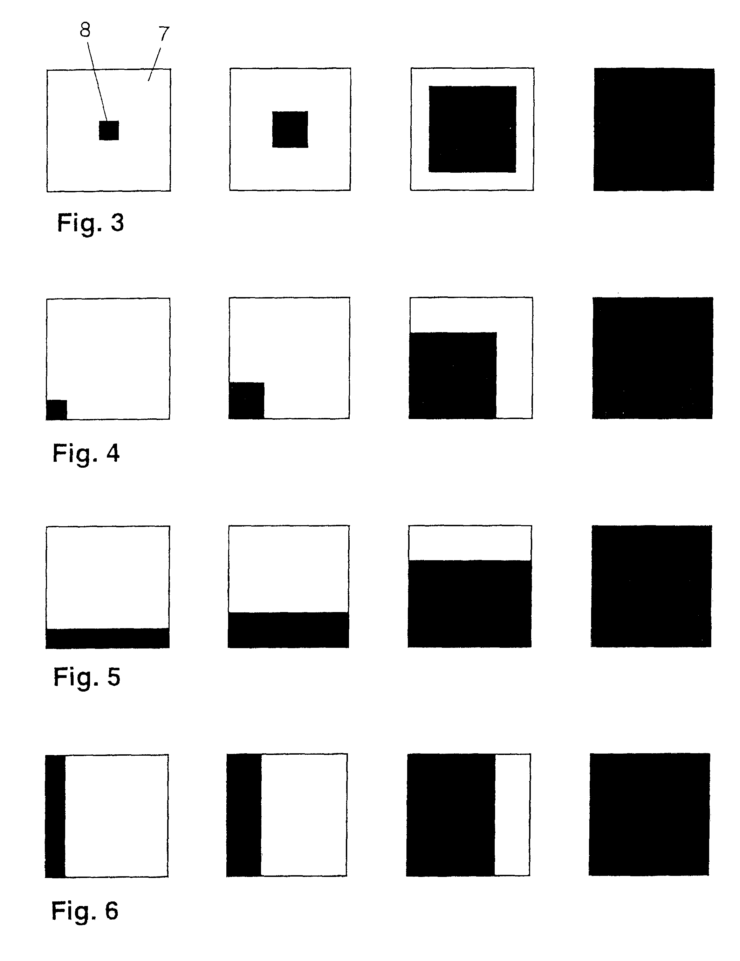

In Fig. 3 the white area 7 represents the picture of the first channel immediately after the switching operation, whereas the black area 8 represents the picture of the second channel. As it can be seen, the area 8 is growing after switching operation within a period of several pictures or even after some seconds to the full area of the screen. At the end of this growing process the dark area 8 of the picture of the newly tuned second channel occupies the complete area of the screen.

Fig. 4 represents the introduction of the new channel picture by a panning corner starting from the left bottom corner.

Fig. 5 presents the introduction of the new channel picture by a vertical panning of the picture from the bottom to the top.

Fig. 6 presents the introduction of the new channel picture by a horizontal panning of the picture from the left to the right.

In the embodiment according to Fig. 2 two receivers 2a, 2b are provided which can be tuned to different channels. If, for example, receiver 2a receives a first channel and the receiver shall be switched to a second channel, then for the first receiver 2b is switched to a second channel, whereas receiver 2a remains tuned to the first channel. In this case for a short time after the switching operation both signals of the first channel and the second channel are available for a picture reproduction according to Figures 3 to 6. It can be seen, that in this case it will not be necessary to freeze the signal because after channel switching signals of both channels are available. In this case there is provided within the signal path to the picture tube 3 a fast switch, not shown in the picture controlled by the deflection circuit and switching between the outputs of receivers 2a, 2b in such a way that the patterns according to Figures 3 to 6 are achieved on the picture screen.

## Claims

1. A television receiver including a channel selector for selecting different channels, **characterized in that** means is provided effecting that with switching from a first channel to a second channel the picture of the second channel expands within the picture of the first channel on the screen of the picture tube (3).

2. A receiver according to claim 1, **characterized in that** there is inserted into the path of the picture signal to the picture tube (3) a picture memory (4) from which is read after the switching process the signal of the first channel for the picture display.

3. A receiver according to claim 1, **characterized in that** immediately after the channel switching the picture signal of the first channel is fed to the picture tube (3) and before the end of the duration of some pictures the smooth fading is started.

4. A receiver according to claim 3, **characterized in that** the total operation up to the end of the fading process occupies a period in the region of 10 pictures.

5. A receiver according to claim 1, **characterized in that** there is inserted into the path of the picture signal a fast switch controlled by the deflection circuit, said switch switching in dependence on the actual position of the electron beam on the screen the control input of the picture tube (3) between the picture signals of the first and the second channel.

6. A receiver according to claim 2, **characterized in that** the area of the screen not occupied by the picture of the second channel is occupied by the signal of the first channel derived from said picture memory (4).

7. A receiver according to claim 1, **characterized in that** the picture signal of the second channel is modified by time compression in such a way that within the partial area the complete picture of the second channel is reproduced.

8. A receiver according to claim 5, **characterized in that** the receiver includes two tuners (2a, 2b)and the expand process is controlled by the fast switch.

## Patentansprüche

1. Fernsehempfänger mit einem Kanalwähler zur Wahl verschiedener Kanäle, dadurch gekennzeichnet, daß Mittel vorgesehen sind, die bewirken, daß mit der Umschaltung von einem ersten Kanal auf einen zweiten Kanal das Bild des zweiten Kanals sich innerhalb des Bildes des ersten Kanals auf dem Schirm der Bildröhre (3) ausdehnt.

2. Empfänger nach Anspruch 1, dadurch gekennzeichnet, daß in den Weg des Bildsignals zu der Bildröhre (3) ein Bildspeicher (4) eingefügt ist, aus dem nach dem Umschaltvorgang das Signal des ersten Kanals für die Bildwiedergabe ausgelesen wird.

3. Empfänger nach Anspruch 1, dadurch gekennzeichnet, daß unmittelbar nach der Kanalumschaltung das Bildsignal des ersten Kanals der Bildröhre (3) zugeführt und vor dem Ende einer Dauer von mehreren Bildern die weiche Überblendung gestartet wird.

4. Empfänger nach Anspruch 3, dadurch gekennzeichnet, daß der Gesamtvorgang bis zum Ende des Einblendvorgangs einen Zeitraum in der Größenordnung von 10 Bildern einnimmt.

5. Empfänger nach Anspruch 1, dadurch gekennzeichnet, daß in den Weg des Bildsignals ein durch die Ablenkschaltung gesteuerter schneller Schalter eingefügt ist und der Schalter in Abhängigkeit von der jeweiligen Lage des Elektronenstrahls auf dem Schirm den Steuereingang der Bildröhre (3) zwischen den Bildsignalen des ersten und des zweiten Kanals umschaltet.

6. Empfänger nach Anspruch 2, dadurch gekennzeichnet, daß die durch das Bild des zweiten Kanals nicht eingenommene Fläche des Bildschirms durch das Signal des ersten Kanals eingenommen wird, das von dem Bildspeicher (4) abgeleitet ist.

7. Empfänger nach Anspruch 1, dadurch gekennzeichnet, daß das Bildsignal des zweiten Kanal durch eine Zeitkomprimierung in einer solchen Weise geändert wird, daß innerhalb der Teilfläche das vollständige Bild des zweiten Kanals wiedergegeben wird.

8. Empfänger nach Anspruch 5, dadurch gekennzeichnet, daß der Empfänger zwei Tuner (2a, 2b) enthält und der Ausdehnungsvorgang durch den schnellen Schalter gesteuert wird.

## Revendications

1. Un récepteur de télévision comportant un sélecteur de chaîne pour sélectionner différentes chaînes, caractérisé en ce que l'on prévoit un moyen effectuant lors de la commutation d'une première chaîne vers une seconde chaîne, l'expansion de l'image de la seconde chaîne à l'intérieur de l'image de la première chaîne sur l'écran du tube image (3).

2. Un récepteur selon la revendication 1, caractérisé en ce que l'on insère dans le chemin du signal image vers le tube image (3) une mémoire d'image (4) à partir de laquelle on lit après le processus de commutation le signal de la première chaîne pour afficher l'image.

3. Un récepteur selon la revendication 1, caractérisé en ce qu'immédiatement après la commutation de chaîne, le signal image de la première chaîne est alimenté vers le tube (3) et, avant la fin de la durée de quelques images, un fondu doux est initialisé.

4. Un récepteur selon la revendication 3, caractérisé en ce que l'opération totale jusqu'à la fin du processus de fondu occupe une période dans les 10 images.

5. Un récepteur selon la revendication 1, caractérisé en ce que l'on insère dans le chemin du signal image un commutateur rapide contrôlé par le circuit de déflexion, ledit commutateur basculant, en fonction de la position actuelle du faisceau d'électrons sur l'écran, l'entrée de commande du tube image (3) entre les signaux d'image de la première et de la seconde chaîne.

6. Un récepteur selon la revendication 2, caractérisé en ce que la surface de l'écran non occupée par l'image de la seconde chaîne est occupée par le signal de la première chaîne dérivée de ladite mémoire d'image (4).

7. Un récepteur selon la revendication 1, caractérisé en ce que le signal image de la seconde chaîne est modifié par compression temporelle, de telle sorte qu'à l'intérieur de la surface partielle, l'image complète de la seconde chaîne est reproduite.

8. Un récepteur selon la revendication 5, caractérisé en ce que le récepteur comporte deux syntoniseurs (2a, 2b) et le processus d'expansion est commandé par le commutateur rapide.
